**Europäisches Patentamt**

**European Patent Office**

**Office européen des brevets**

(19)

(11) Veröffentlichungsnummer: **0 160 846**
**B1**

(12)

# EUROPÄISCHE PATENTSCHRIFT

(45) Veröffentlichungstag der Patentschrift:
**17.11.88**

(21) Anmeldenummer: **85104122.8**

(22) Anmeldetag: **04.04.85**

(51) Int. Cl.⁴: **H 01 M 10/30, H 01 M 4/26**

(54) **Verfahren zur Herstellung eines geladenen und trocken lagerfähigen Nickel-Cadmium-Akkumulators in offener Bauweise.**

(30) Priorität: **07.05.84 DE 3416816**

(43) Veröffentlichungstag der Anmeldung:
**13.11.85 Patentblatt 85/46**

(45) Bekanntmachung des Hinweises auf die Patenterteilung:
**17.11.88 Patentblatt 88/46**

(84) Benannte Vertragsstaaten:
**DE FR GB SE**

(56) Entgegenhaltungen:
**US - A - 3 671 318**

**PATENTS ABSTRACTS OF JAPAN, Band 5, Nr. 153
(E-76)[825], 26. September 1981; & JP-A-56 86 461
(MATSUSHITA DENKI SANGYO K.K.) 14.07.1981
PATENTS ABSTRACTS OF JAPAN, Band 4, Nr. 121
(E-23)[603], 27. August 1980; & JP-A-55 76 570
(FURUKAWA DENCHI K.K.) 09.06.1980
PATENTS ABSTRACRS OF JAPAN, Band 8, Nr. 44
(E-229)[1481], 25. February 1984; & JP-A-58 201 271
(YUASA DENCHI K.K.) 24.11.1983**

(73) Patentinhaber: **VARTA Batterie Aktiengesellschaft, Am
Leineufer 51, D-3000 Hannover 21 (DE)**

(72) Erfinder: **Knabenbauer, Wolfgang, Pappelstrasse 36,
D-5800 Hagen (DE)**
Erfinder: **Tepel, Rudolf, Moorweg 10,
D-3013 Barsinghausen 12 (DE)**

(74) Vertreter: **Kaiser, Dieter Ralf, Dipl.-Ing.,
Gundelhardtstrasse 72, D-6233 Kelkheim/Ts. (DE)**

## Beschreibung

Die Erfindung betrifft ein Verfahren zur Herstellung eines alkalischen Akkumulators mit positiver Nickeloxid- und negativer Cadmiumelektrode in offener Bauweise, welcher geladen und trocken lagerfähig ist.

Alkalische Akkumulatoren in ihren vielfältigen Ausführungsformen, seien es Röhrchenzellen für geringe Belastungen, Taschenplattenzellen für mittlere Ströme oder Akkumulatoren vom Sinterzellentyp, die höchsten Leistungsansprüchen genügen, werden im allgemeinen gefüllt und geladen an den Verbraucher ausgeliefert. Eine Auslieferung im ungefüllten und ungeladenen, jedoch nassen Zustand erfolgt gelegentlich aus Gründen der Sicherheit während des Transports. In diesem Fall muss ein Ladegerät für die Inbetriebsetzung bereitgestellt werden.

Auch der geladene, trocken lagerfähige alkalische Akkumulator zählt als Pendant zu der schon längst bekannten «trocken geladenen» Bleibatterie bereits zum Stande der Technik. So findet sich z.B. in der DE-OS 1 421 175, ein Verfahren zum Trocknen geladener Bleisammlerplatten betreffend, der Hinweis, dass die gleiche Behandlungsweise auf das Ziel hin, die Batterie selbst nach langer Lagerzeit lediglich durch Füllen mit dem Elektrolyten gebrauchsfähig zu machen, auch z.B. für Sinterelektroden alkalischer Zellen geeignet ist.

In der DE-AS 1 240 056 wird im Zusammenhang mit einer Präparationsmethode für sogenanntes schwarzes Nickel (III)-hydroxid [Ozonbehandlung von Nickel(II)-hydroxid] die Möglichkeit trocken erstellbarer Sammlersysteme ausdrücklich erwähnt, indem eine mit Nickel(III)-hydroxid gefüllte Platte ohne weitere nasse Formierung direkt gegen eine negative Platte eingesetzt werden kann. Einem solchen System wird, ähnlich wie auch in der US-PS 3 347 706, eine nahezu unbegrenzte Lagerfähigkeit ohne Elektrolyt zugeschrieben, so dass es zum erstmaligen Gebrauch nur der Befüllung mit dem alkalischen Elektrolyten bedarf.

Im Hinblick auf das besonders kritische Lagerverhalten geladener Cadmiumelektroden lässt sich der DE-AS 2 459 009 ein Trocknungsverfahren entnehmen, bei dem die Elektroden nach Waschung und gegebenenfalls Imprägnierung mit einem Konservierungsmittel wie Borsäure in einem Beutel aus undurchlässigem Folienmaterial in ein Heizbad verbracht werden, bei welchem sie einer höheren Temperatur als der Siedetemperatur des Wassers ausgesetzt sind. Dabei bildet die schädliche Restfeuchtigkeit ein Dampfpolster um die Elektroden und verhindert beim Entweichen aus dem Beutel einen Luftzutritt.

Der Erfindung liegt die Aufgabe zugrunde, einem offenen alkalischen Akkumulator, der mit fertigungsüblichen Elektroden bestückt ist, die Eigenschaft zu geben, dass er unmittelbar im endmontierten Zustand geladen und trocken lagerfähig ist.

Die Aufgabe wird erfindungsgemäss durch die im kennzeichnenden Teil des Anspruchs 1 angegebenen Massnahmen gelöst.

Der Vorteil dieser Massnahmen liegt in der Einfachheit der Arbeitsschritte sowie darin, dass sie sich problemlos in den bestehenden Fertigungsfluss eingliedern lassen. Ihnen vorgeschaltet ist nämlich die elektrochemische Aufladung der Elektrodenplatten, die unabhängig von deren Bauart und Vorgeschichte (Sintern, Imprägnieren) erfolgt. Die Ladung positiver und negativer Sinterelektroden zum Beispiel, die in Starterzellen für tiefe Temperaturen eingesetzt werden, geschieht in KOH der Dichte $1,20 \text{ g/cm}^3$ oder NaOH entsprechender Dichte bei einem Ladefaktor $> 2$, wobei sich Ladeströme bis $\leq 5 \text{ CA}$ anwenden lassen. Bei Taschenplatten oder anderen Elektrodenkonstruktionen sind die Ladebedingungen in angemessener Weise moderiert.

Die positiven Sinterelektroden behalten nun eine konstante Restkapazität von 85% ihrer maximalen Kapazität (Kapazität der 1. Entladung in einem zyklischen Lade/Entladebetrieb), wenn sie erfindungsgemäss nach der Formierung alkalifrei gewaschen und bei Temperaturen zwischen 70 und 140°C, vorzugsweise bei 110°C, scharf getrocknet werden. Sie sind dann montagefertig.

Die negativen Sinterelektroden werden nach der Formierung ebenfalls alkalfrei gewaschen, dann aber erfindungsgemäss zum Zwecke der Konservierung kurzzeitig (ca. 5 sec.) in eine schwefelsaure Lösung mit 20 bis 80 g $H_2SO_4$/l, vorzugsweise 50 g $H_2SO_4$/l, getaucht. Besonders günstig ist es, wenn die Lösung zusätzlich zwischen 5 und 50 g Cd $SO_4$/l, vorzugsweise 20 g Cd $SO_4$/l, enthält. Unmittelbar daran anschliessend, ohne Zwischenwäsche, folgt eine scharfe Trocknung unter den gleichen Bedingungen wie weiter oben bei den positiven Elektroden angegeben.

Auf solche Art hergestellte Elektroden werden nunmehr in üblicher Weise zu Zellen bzw. Batterien verbaut, die als trockene und geladene beliebig lange lagerfähig sind.

Besonders vorteilhaft lässt sich auch eine nach dem sogenannten electro deposit-Verfahren (kathodische Metallabscheidung aus Cadmiumsalzlösungen nach DE-OS 2 822 821) hergestellte negative Elektrode der erfindungsgemässen Behandlung unterziehen und in der Zelle mit einer lagerfähigen Sinterelektrode kombinieren.

Beispiel:

Bei einer Sinterfolienzelle der Nennkapazität 40 Ah, bestückt mit 15 positiven und 16 negativen Elektroden, wären die Bedingungen beim erfindungsgemässen Herstellungsverfahren folgende:

Positive Platten: 2,5 h geladen mit $I \leq 3 \text{ A/dm}^2$ in KOH der Dichte $1,20 \text{ g/cm}^3$, danach alkalifrei gewaschen und 15 Minuten bei t = 110°C getrocknet.

Negative Platten: 2,5 h geladen mit $I \leq 3 \text{ A/dm}^2$ in KOH der Dichte $1,20 \text{ g/cm}^3$, danach alkalifrei gewaschen, 5 Sekunden in einer Lösung von 50 g $H_2SO_4$ und 20 g Cd $SO_4$ pro Liter behandelt und 15 Minuten bei t = 110°C getrocknet.

Die Elektrodenplatten wurden mit den Standardbauteilen in üblicher Weise montiert und die Zelle nach 100 Tagen Lagerzeit bei Raumtemperatur einem elektrischen Test unterzogen. Hierzu wurde die Zelle mit dem auch sonst verwendeten Elektrolyten gefüllt und nach 5 Minuten Standzeit mit dem Nennstrom von 40 A (= 1 CA) bis zur Entladeschlussspannung von 1 V entladen.

Die Stromausbeute betrug 65% der Nennkapazität. Nach 7stündiger Wiederaufladung mit I = 0,2 CA unter einer Ladespannung von 1,625 V erbrachte die erneute Entladung mit Entladestrom I = 1 CA/1,0 V eine Stromausbeute von 95% der Nennkapazität. Eine Hochstromentladung in der Kälte (I = 10 CA/0,5 V; t = –30°C) lieferte dagegen eine Stromausbeute von 65% der Nennkapazität, also den gleichen Wert, der als Restkapazität der Zelle nach 100tägiger Trockenlagerung bei Entladung mit dem 1stündigen Strom (Nennstrom) erzielbar war.

Das erfindungsgemässe Verfahren macht es möglich, bereits in vielen Anwendungszweigen erfolgreich eingeführte alkalische Akkumulatoren des offenen Typs ohne irgendwelche konstruktiven Abwandlungen, etwa der Gestalt und Zusammensetzung des Elektrodenmaterials, und mit nur geringen Umstellungen des Produktionsablaufes alternativ auch als trockene, geladene Batterien herzustellen.

## Patentansprüche

1. Verfahren zur Herstellung eines alkalischen Akkumulators mit positiven Nickeloxid- und negativen Cadmiumelektroden in offener Bauweise, welcher geladen und trocken lagerfähig ist, dadurch gekennzeichnet, dass die negativen Elektroden im geladenen Zustand einer konservierenden Behandlung mit einer schwefelsauren Lösung unterzogen, getrocknet und zusammen mit elektrochemisch geladenen, alkalifrei gewaschenen und getrockneten positiven Elektroden eingebaut werden.

2. Verfahren nach Anspruch 1, dadurch gekennzeichnet, dass die schwefelsaure Lösung zusätzlich Cadmiumsulfat enthält.

3. Verfahren nach den Ansprüchen 1 oder 2, dadurch gekennzeichnet, dass die schwefelsaure Lösung zwischen 20 und 80 g H$_2$SO$_4$/l, vorzugsweise 50 g H$_2$SO$_4$/l, enthält.

4. Verfahren nach den Ansprüchen 2 oder 3, dadurch gekennzeichnet, dass die schwefelsaure Lösung zwischen 5 und 50 g Cd SO$_4$/l, vorzugsweise 20 g Cd SO$_4$/l, enthält.

5. Verfahren nach einem der Ansprüche 1 bis 4, dadurch gekennzeichnet, dass die Trocknung der Elektroden jeweils bei Temperaturen zwischen 70 und 140°C, vorzugsweise bei 110°C, vorgenommen wird.

6. Verfahren nach einem der Ansprüche 1 bis 5, dadurch gekennzeichnet, dass der Akkumulator Sinterelektroden enthält.

7. Verfahren nach einem der Ansprüche 1 bis 5, dadurch gekennzeichnet, dass der Akkumulator Taschenelektroden enthält.

8. Verfahren nach einem der Ansprüche 1 bis 5, dadurch gekennzeichnet, dass die negativen Elektroden durch kathodische Metallabscheidung aus Cadmiumsalzlösungen erzeugte Cadmiumelektroden und die positiven Elektroden Sinterelektroden sind.

## Claims

1. Method for producing an alkaline accumulator with positive nickel oxide and negative cadmium electrodes in an open construction which is capable of being stored charged and dry, characterized in that, in the charged state, the negative electrodes are subjected to a preserving treatment with a sulphuric acid solution, dried and assembled together with electrochemically charged positive electrodes which have been washed until alkali-free and dried.

2. Method according to Claim 1, characterized in that the sulphuric acid solution additionally contains cadmium sulphate.

3. Method according to Claims 1 or 2, characterized in that the sulphuric acid solution contains between 20 and 80 g H$_2$SO$_4$/l, preferably 20 g of CdSO$_4$/l.

4. Method according to Claims 2 or 3, characterized in that the sulphuric acid solution contains between 5 and 50 g of CdSO$_4$/l, preferably 20 g of CdSO$_4$/l.

5. Method according to one of Claims 1 to 4, characterized in that the electrodes are dried in each case at temperatures between 70 and 140°C, preferably at 110°C.

6. Method according to one of Claims 1 to 5, characterized in that the accumulator contains sintered electrodes.

7. Method according to one of Claims 1 to 5, characterized in that the accumulator contains pocket electrodes.

8. Method according to one of Claims 1 to 5, characterized in that the negative electrodes are cadmium electrodes produced by cathodic metal deposition from cadmium salt solutions and the positive electrodes are sintered electrodes.

## Revendications

1. Procédé pour fabriquer un accumulateur alcalin avec des électrodes positives à l'oxyde de nickel et des électrodes négatives en cadmium, en construction non scellée, cet accumulateur pouvant être conservé en étant chargé et séché, procédé caractérisé en ce que les électrodes négatives à l'état chargé sont soumises à un traitement de conservation par une solution d'acide sulfurique, séchées et sont montées avec les électrodes positives chargées, débarrassées de l'alcali par lavage, et séchées.

2. Procédé selon la revendication 1, caractérisé en ce que la solution d'acide sulfurique contient en outre du sulfate de cadmium.

3. Procédé selon les revendications 1 ou 2, charactérisé en ce que la solution d'acide sulfurique contient entre 20 et 80 grammes de H$_2$SO$_4$

par litre, de préférence, 50 grammes de $H_2SO_4$ par litre.

4. Procédé selon les revendications 2 ou 3, caractérisé en ce que la solution d'acide sulfurique contient entre 5 et 50 grammes de $CdSO_4$ par litre, de préférence 20 grammes de $CdSO_4$ par litre.

5. Procédé selon une des revendications 1 à 4, caractérisé en ce que le séchage des électrodes s'opère respectivement à des températures comprises entre 70 et 140°C, de préférence à 110°C.

6. Procédé selon une des revendications 1 à 5, caractérisé en ce que l'accumulateur contient des électrodes frittées.

7. Procédé selon une des revendications 1 à 5, caractérisé en ce que l'accumulateur contient des électrodes à poches.

8. Procédé selon une des revendications 1 à 5, caractérisé en ce que les électrodes négatives sont des électrodes de cadmium obtenues par dépôt cathodique de métal, à partir de solutions de sels de cadmium, tandis que les électrodes positives sont des électrodes frittées.